# EUROPÄISCHE PATENTSCHRIFT

(11) **EP 0 891 238 B1**
(45) Veröffentlichungstag und Bekanntmachung des Hinweises auf die Patenterteilung: **16.05.2001**
(21) Anmeldenummer: 97905060.6
(22) Anmeldetag: 20.02.1997
(51) Int. Cl.: B23B 51/02

(54) **BOHRWERKZEUG FÜR WERKZEUGMASCHINEN SOWIE VERFAHREN ZU DESSEN HERSTELLUNG**
DRILLING TOOL FOR MACHINE TOOLS AND METHOD OF PRODUCING THE SAME
OUTIL DE PERCAGE POUR MACHINES-OUTILS ET PROCEDE PERMETTANT DE LA PRODUIRE

(30) Priorität: 27.03.1996 DE 19612104
(43) Veröffentlichungstag der Anmeldung: 20.01.1999
(73) Patentinhaber: KOMET Präzisionswerkzeuge Robert Breuning GmbH, D-74354 Besigheim (DE)
(72) Erfinder: RECCIUS, Helmut, D-51647 Gummersbach (DE); STOLZ, Gerhard, D-74379 Ingersheim (DE)
(74) Vertreter: Wolf, Eckhard, Dr.-Ing.
(86) Internationale Anmeldenummer: EP9700806
(87) Internationale Veröffentlichungsnummer: WO9735681

(56) Entgegenhaltungen:
- DE-A- 4 033 877

## Beschreibung

Die Erfindung betrifft ein Bohrwerkzeug für Werkzeugmaschinen mit einem mindestens eine Schneide aufweisenden Werkzeugkopf, einem an den Werkzeugkopf anschließenden, mit seinem den Werkzeugkopf abgewandten Ende in einem maschinenseitigen Halter oder Futter einspannbaren Werkzeugschaft, mindestens einer in die Schaftoberfläche eingeformten, vom Werkzeugkopf aus sich in Spanabfuhrrichtung über einen Teil der Schaftlänge erstreckenden geraden oder wendelförmigen Spannut und einer den Werkzeugschaft umfassenden und dabei die Spannut zumindest über einen Teil ihrer Länge unter Bildung eines geschlossenen Spankanals übergreifenden Hülse. Die Erfindung betrifft weiter ein Verfahren zur Herstellung eines solchen Bohrwerkzeugs.

Bohrwerkzeuge dieser Art werden entweder zum Vollbohren oder zum Aufbohren, Profilsenken oder Plansenken vorgefertigter Bohrungen eingesetzt. Beim Bohren ins Volle oder beim Nacharbeiten von Sackbohrungen kann die Spanabfuhr durch einen Kühlschmierstoff unterstützt werden, der mit hohem Druck an der Schaftspitze austritt und die Späne über die Spannut aus der Bohrung herausspült. Bei radial offenen Spannuten werden die aufgrund der Zentrifugalkraft des drehenden Werkzeugs radial nach außen gedrängten Späne des in die Bohrung eingedrungenen Werkzeugs vornehmlich an der Bohrungswand entlanggeführt. Dies hat bei vorgefertigten Bohrungen, in deren Wand Hohlräume, wie Taschen oder Querbohrungen vorhanden sind, den Nachteil, daß die Späne in die Hohlräume eindringen und von dort nicht mehr abfließen können. Die Späne müssen dann in einem zeitaufwendigen Arbeitsschritt nachträglich entfernt werden.

Um diesen Nachteil zu vermeiden, ist es bei einem Bohrwerkzeug der eingangs angegebenen Art bekannt (DE-A-40 33 877), den Werkzeugschaft mit einer eng anliegenden Hülse zu versehen, die sich vom Werkzeugkopf in Richtung auf das Einspannende erstreckt. Die Spannuten und die Innenwand der Hülse begrenzen somit Kanäle, über die die beim Bohren anfallenden Späne abgeleitet werden. Da der Werkzeugkopf radial über den Außenumfang des Werkzeugschafts hinausragt und somit einen größeren Durchmesser als der Innendurchmesser der Hülse hat, kann bei dem bekannten Bohrwerkzeug die Hülse nur von der Seite des Einspannendes aus auf den Werkzeugschaft aufgeschoben werden. Bei Bohrern mit verdicktem Schaft und bei Stufenbohrern ist eine Montage einer solchen Hülse überhaupt nicht möglich.

Ausgehend hiervon liegt der Erfindung die Aufgabe zugrunde, ein Bohrwerkzeug und ein Verfahren zur Herstellung dieses Bohrwerkzeugs zu entwickeln, womit für unterschiedliche Ausführungen von Bohrwerkzeugen geschlossene Kanäle zur Ableitung der Späne bereitgestellt werden können.

Zur Lösung dieser Aufgabe werden die in den Ansprüchen 1, 24, 25 und 27 angegebenen Merkmalskombinationen vorgeschlagen.

Der erfindungsgemäßen Lösung liegt vor allem der Gedanke zugrunde, daß die Hülse und das Werkzeug so ausgebildet werden, daß die Hülse trotz des gegenüber dem Werkzeugschaft einen größeren Durchmesser aufweisenden Werkzeugkopfes von der Bohrerspitze aus auf den Werkzeugschaft montiert werden kann.

Um dies zu erreichen, wird gemäß der Erfindung vorgeschlagen, daß die Hülse einen sich über ihre gesamte Länge erstreckenden Schlitz aufweist. Der Schlitz ermöglicht es, die Hülse bei der Montage so weit aufzuspreizen, daß sie über den verdickten Werkzeugkopf geschoben und am Werkzeugschaft eng anliegend befestigt werden kann. Die Hülse besteht deshalb zweckmäßig aus einem federelastischen Material, vorzugsweise aus Federstahl. Um einen sicheren Sitz zu gewährleisten, ist es von Vorteil, wenn die Hülse mit ihren den Schlitz begrenzenden Rändern in einem außerhalb der mindestens einen Spannut befindlichen Oberflächenbereich auf dem Vollmaterial des Werkzeugschafts anliegt. Bei einem Spiralbohrer liegen diese Ränder auf den erhabenen Wendelgängen zwischen den eingesenkten Spannuten an.

Die geschlitzte Hülse kann entweder kraftschlüssig auf den Werkzeugschaft aufgeklemmt und/oder materialschlüssig durch Schweißen, Löten oder Kleben mit dem Werkzeugschaft verbunden werden. Im letzteren Falle trägt die Hülse als mittragendes Element dazu bei, die Torsions-und Biegesteifigkeit des Werkzeugs zu erhöhen.

Um ein axiales Verschieben der Hülse auf dem Werkzeugschaft zu verhindern, weist der Werkzeugkopf eine als Anschlag für die Hülse dienende, in Spanablaufrichtung weisende Axialschulter auf. Die Hülse kann außerdem in Umfangsrichtung formschlüssig mit dem Hülsenschaft verbunden werden. Sie weist dazu zweckmäßig mindestens einen in eine entsprechende Ausnehmung der Axialschulter eingreifenden stirnseitigen Vorsprung auf. Das Bohrwerkzeug kann auch so eingespannt werden, daß die Hülse von der maschinenseitigen Werkzeugaufnahme, üblicherweise einem Spannfutter, gehalten wird.

Wenn das Bohrwerkzeug als Stufenbohrer ausgebildet ist, dessen Werkzeugschaft mindestens zwei Schaftabschnitte unterschiedlichen Durchmessers mit durchgehenden Spannuten aufweist, wobei im Stufenbereich zwischen den beiden Schaftabschnitten mindestens eine weitere Schneide angeordnet ist, kann sich die Hülse über mindestens einen der Schaftabschnitte erstrecken. Um einen geschlossenen Spankanal zu erhalten, besteht die Hülse jedoch aus mindestens zwei in axialem Abstand voneinander angeordneten zylindrischen Hülsenabschnitten unterschiedlichen Durchmessers, die durch die Spannuten im Stufenbereich zwischen zwei Schaftabschnitten übergreifende Stege miteinander verbunden sind.

Eine weitere bevorzugte Ausgestaltung der Erfindung sieht vor, daß der Hülsenschlitz nachträglich durch Materialauftrag, beispielsweise beim Verlöten oder Verschweißen mit dem Werkzeugschaft, geschlossen wird.

Mit den erfindungsgemäßen Bohrwerkzeugen können zwar die am Bearbeitungsgrund anfallenden Späne durch die Druckkraft nachfolgender Späne über den Spankanal nach außen ins Freie geschoben werden. Bevorzugt wird das erfindungsgemäße Bohrwerkzeug jedoch in Verbindung mit einer Absaugeinrichtung eingesetzt, die in der maschinenseitigen Werkzeugaufnahme entweder integriert oder in diese eingesetzt ist.

Eine vorteilhafte Ausgestaltung der Erfindung sieht vor, daß der Werkzeugkopf zum Einsetzen oder Auswechseln der Hülse vom Werkzeugschaft abnehmbar ist.

Eine weitere bevorzugte Ausgestaltung der Erfindung sieht daher vor, daß der Werkzeugschaft im Bereich seines maschinenseitigen Endes gemeinsam mit der Hülse in eine maschinenseitige Absaugvorrichtung einsetzbar ist. Dadurch wird erreicht, daß der Spankanal in eine Spanabfuhrleitung der Absaugvorrichtung mündet.

Zur Verbesserung der Spanabfuhr wird gemäß einer vorteilhaften Ausgestaltung der Erfindung vorgeschlagen, daß der Werkzeugschaft mindestens einen bis zum Werkzeugkopf reichenden und dort im Bereich der Schneide mit dem Spankanal kommunizierenden, mit Druckluft und/ oder einem Kühlschmiermittel beaufschlagbaren Zufuhrkanal aufweist. Die Druckluft oder das Kühlschmiermittel wird dann gemeinsam mit dem Spänen über den Spankanal zur Absaugeinrichtung hin abgeführt. Die Druckluft oder das Kühlschmiermittel wird entweder über die Absaugeinrichtung oder zentral über eine Spindel der Werkzeugmaschine zugeführt. Die Spanabfuhr wird außerdem erleichtert, wenn die mindestens eine Spannut einen teilkreisförmigen Querschnittsbereich aufweist, der sich mit der Hülse zu einem im wesentlichen kreisförmigen Spankanal ergänzt.

Für die Herstellung des Bohrwerkzeugs gibt es verschiedene Möglichkeiten. Eine erste Verfahrensvariante besteht darin, daß ein einer Abwicklung der Hülse entsprechender Zuschnitt aus ungehärtetem Metallblech auf einen dem Werkzeugschaft geometrisch entsprechenden Dorn unter Bildung der geschlitzten Hülse aufgewickelt und auf diesem federelastisch gehärtet wird, und daß die auf diese Weise vorgefertigte Hülse unter Aufweitung des Schlitzes über den Werkzeugkopf geschoben und auf den Werkzeugschaft aufgeklemmt wird.

Gemäß einer zweiten Verfahrensvariante wird ein Metallblech über einen dem Werkzeugschaft geometrisch entsprechenden Stempel oder Dorn unter Bildung der Hülse spanlos umgeformt, wobei die auf diese Weise vorgefertigte und mit einem Schlitz versehene Hülse auf den Werkzeugschaft montiert wird. Das Metallblech kann dabei vorzugsweise tiefgezogen oder fließgepreßt werden.

Eine dritte Herstellungsvariante sieht vor, daß eine pastöse, Hartmetall enthaltende Masse in eine der Hülse entsprechende Spritzgußform eingespritzt und daß die auf diese Weise vorgefertigte und mit einem Schlitz versehene Hülse anschließend gesintert und auf den Werkzeugschaft montiert wird.

Bei den beiden letztgenannten Herstellungsvarianten wird die Hülse zweckmäßig unter Bildung des Schlitzes aufgeschnitten, so daß sie unter Aufweitung des Schlitzes über den Werkzeugkopf geschoben und auf den Werkzeugschaft aufgeklemmt werden kann.

Um die Gleiteigenschaften an der Hülsenoberfläche zu verbessern, kann die Hülse mit einem pastösen Hartmetallwerkstoff oberflächenbeschichtet und unter Fixierung der Schicht erhitzt werden.

Bei allen Ausführungsvarianten kann die Hülse nach der Montage materialschlüssig, beispielsweise durch Verlöten oder Schweißen mit dem Werkzeugschaft verbunden werden.

Im folgenden wird die Erfindung anhand der in der Zeichnung dargestellten Ausführungsbeispiele näher erläutert. Es zeigen
- Fig. 1a: eine teilweise geschnittene Ansicht eines Bohrwerkzeugs mit auf dem Werkzeugschaft angeordneter geschlitzter Hülse;
- Fig. 1b: eine Abwicklung der geschlitzten Hülse nach Fig. 1a;
- Fig. 2: einen Längsschnitt durch das Bohrwerkzeug nach Fig. 1 im Bereich des Werkzeugkopfes;
- Fig. 3: eine Seitenansicht des Bohrwerkzeugs, das in eine Werkzeugmaschine eingespannt und an eine Absaug- und Spülvorrichtung angeschlossen ist;
- Fig. 4a: eine Seitenansicht eines Stufenbohrers mit geschlitzter Hülse;
- Fig. 4b: eine Seitenansicht des Stufenbohrers nach Fig. 4a bei abgenommener Hülse;
- Fig. 4c: eine Abwicklung der geschlitzten Hülse nach Fig. 4a.

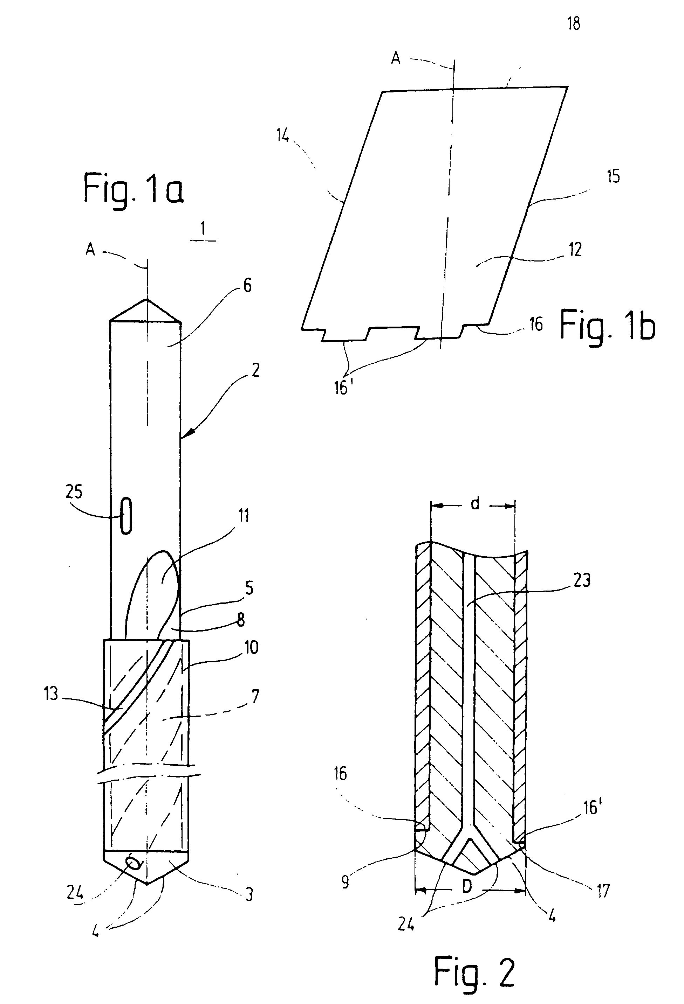

Das in Fig. 1 und 2 gezeigte Bohrwerkzeug weist als Kern einen Spiralbohrer 2 auf, der einen Werkzeugkopf 3 mit zwei winkelig angestellten Schneiden 4 sowie einen sich an dem Werkzeugkopf 3 anschließenden Werkzeugschaft 5 aufweist. Der Werkzeugschaft 5 weist je zwei wendelförmige Spannuten 7 und zwischen den Spannuten 7 angeordnete Oberflöchenbereiche (Rippen) 8 auf, die vom Werkzeugkopf 3 aus sich in Spanablaufrichtung über einen Teil des Bohrerschafts erstrecken. An seinem nutenfreien Schaftende 6 kann das Bohrwerkzeug 1 in das Futter einer Werkzeugmaschine eingespannt werden.

Der Werkzeugkopf 3 weist einen Außendurchmesser D auf, der etwas größer ist als der Außendurchmesser d des Werkzeugschafts 5, so daß zwischen Werkzeugkopf 3 und Werkzeugschaft 5 ein Absatz bzw. eine Schulter 9 gebildet wird.

Auf dem Werkzeugschaft 5 befindet sich eine geschlitzte Hülse 10. Die Hülse 10 ist mit dem Werkzeugschaft 5 form- und kraftschlüssig und gegebenenfalls auch materialschlüssig verbunden. Sie stützt sich mit ihrem einen Rand 16 an der Schulter 9 des Werkzeugkopfs 3 ab und endet mit ihrem gegenüberliegenden Rand 18 kurz vor einem gegen das Einspannende 6 des Werkzeugschafts 5 gerichteten Auslauf 11 der Spannuten 7. Die Hülse 10 hat maximal den gleichen Außendurchmesser D wie der Bohrkopf 3, kann jedoch auch einen etwas kleineren Durchmesser aufweisen.

Die Hülse 10 wird zweckmäßig aus einem Stahlblech 12 gemäß Fig. 1b aus federelastischem Material hergestellt, wobei die Abwicklung der Hülse nach Fig. 1b ein schiefwinkliges Parallelogramm ergibt. Zur Orientierung ist in Fig. 1b die Längsachse A des Bohrwerkzeugs eingezeichnet. Die Winkel der Seitenränder 14,15 des Blechzuschnitts 12 gegenüber der Achse A entsprechen dem Steigungswinkel der wendelförmigen Rippe 8. Zur Herstellung der Hülse 10 wird der Blechzuschnitt 12 über einen Dorn gerollt, so daß sich ein schmaler Schlitz 13 ergibt, der von den Rändern 14,15 des Zuschnitts 12 begrenzt ist. Die Hülse 10 ist so auf dem Werkzeugschaft 5 angeordnet, daß der Schlitz 13 längs einer der Rippen 8 verläuft, wobei die den Schlitz 13 begrenzenden Ränder 14,15 auf der Rippe 8 aufliegen.

An ihrem unteren Rand 16 weist die Hülse 10 zwei Vorsprünge 16' auf, die in entsprechende Ausnehmungen 17 der Schulter 9 formschlüssig eingreifen und die Hülse verdrehsicher auf dem Werkzeugschaft halten. Zur weiteren Verbesserung in dieser Hinsicht kann die Hülse 10 an ihren Rändern 14 und 15 mit dem Werkzeugschaft 5 verschweißt werden.

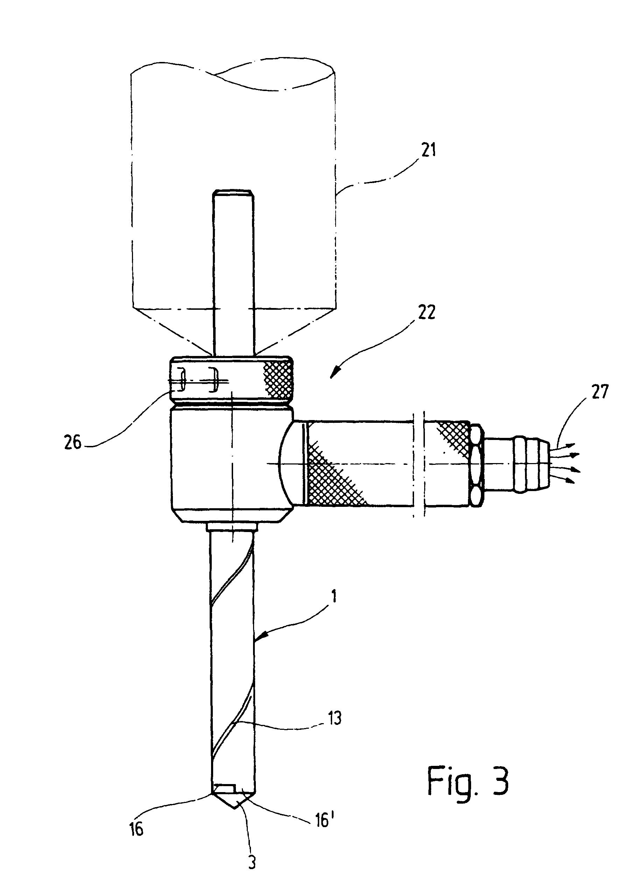

Wie in Fig. 3 gezeigt, wird das Bohrwerkzeug 1 in ein Spannfutter 21 einer Werkzeugmaschine eingespannt werden. Bei dem dort gezeigten Ausführungsbeispiel ist im Bereich des Spannfutters 21 zusätzlich eine maschinenfeste Absaug- und Spüleinrichtung 22 vorgesehen, in die das Bohrwerkzeug 1 zusammen mit der Hülse 10 einspannbar ist. Beim Bohren werden durch die Schneiden 4 am Bearbeitungsgrund eines nicht dargestellten Werkstücks Späne abgehoben, die über die Spannuten 7 bei eingeschalteter Absaugvorrichtung 22 ständig in Richtung der Pfeile 27 abgesaugt werden. Durch die Hülse 10 wird verhindert, daß die Späne mit der Bohrungswand des Werkstücks in Berührung kommen und dadurch die Qualität der Bohrung beeinträchtigen.

Um einen zuverlässigen Abtransport der Späne durch die zwischen den Spannuten 7 und der Hülse 10 gebildeten Spankanäle ohne Verstopfungsgefahr zu gewährleisten, ist es zweckmäßig, die Schneiden 4 mit spanbrechenden und/oder spanformenden Kanten- und Spanflächenkonturen zur Erzeugung kurzer und lockiger Späne zu versehen.

Wie insbesondere aus Fig. 1a und 2 zu ersehen ist, enthält des Bohrwerkzeug einen über eine Öffnung 25 mit Druckluft oder einem Kühlschmiermittel beaufschlagbaren Zufuhrkanal 23, der im Bereich des Werkzeugkopfs 3 verzweigt und an den Mündungen 24 am stirnseitigen Ende des Werkzeugkopfs 3 ins Freie austritt. Der Zufuhrkanal 23 kommuniziert über die Mündung 25 im Bereich der Absaug- und Spüleinrichtung mit einem Verteiler 26. Grundsätzlich ist es auch möglich, den Zufuhrkanal 23 bis zum einspannseitigen Ende 6 des Bohrerschafts zu führen und dort über das Spannfutter mit Druckluft oder Kühlschmiermittel zu beaufschlagen.

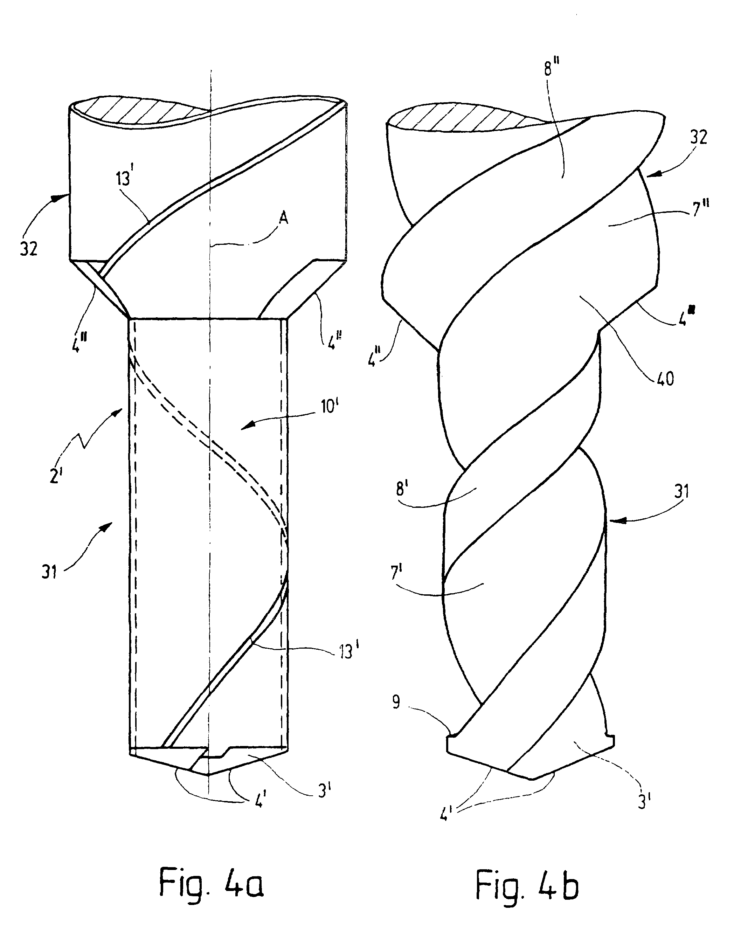

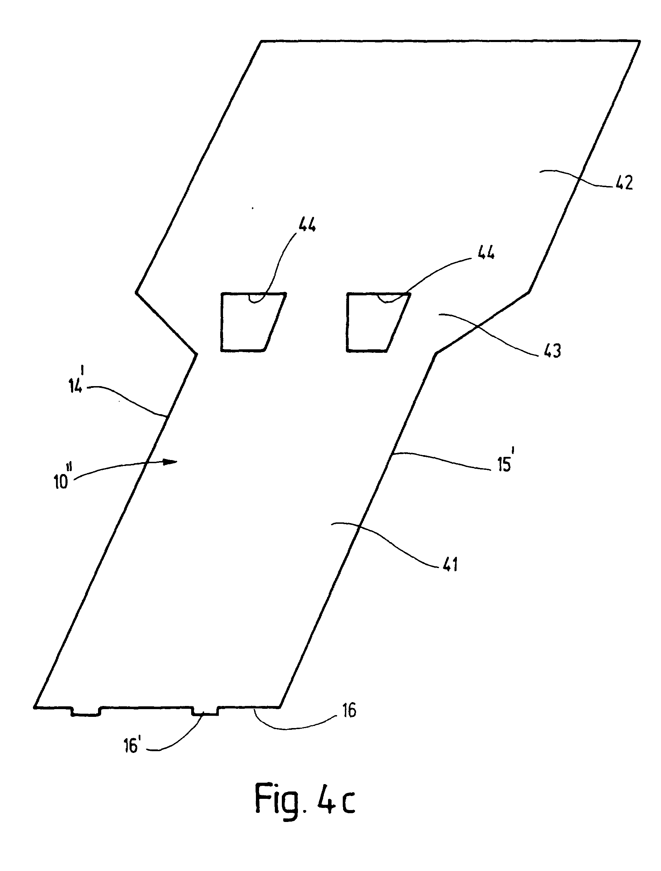

Der in Fig. 4a gezeigte Stufenbohrer 2'' weist einen Vorbohrer 31 mit kleinerem Durchmesser und einen Hauptbohrer 32 mit größerem Durchmesser auf. Der Vorbohrer 31 enthält einen abgestuften Werkzeugkopf 3' mit entsprechenden Schneiden 4', während der Hauptbohrer im konischen Zwischenbereich 40 zwei Schneiden 4'' aufweist (Fig. 4b). Die Spannuten 7' und die dazwischen liegenden Rippen 8' des Vorbohrers 31 gehen im Stufenbereich 40 in die gewendelten Spannuten 7'' und die Rippen 8'' des Hauptbohrers 32 unmittelbar über. Auf den Schaft des Vorbohrers 31 und des Hauptbohrers 32 wird eine geschlitzte Hülse 10' mit einem Schlitz 13' durch Aufspreizen über den Werkzeugkopf 3' und den konischen Zwischenbereich 40 geschoben und dort festgeklemmt und/ oder angeschweißt. Wie aus Fig. 4c zu ersehen ist, ist die geschlitzte Hülse aus einem Zuschnitt 10'' hergestellt, der ein schmales Feld 41 für den Vorbohrer 31 und ein breites Feld 42 für den Hauptbohrer 32 aufweist, die durch ein Übergangsfeld 43 miteinander verbunden sind. Die Durchbrüche 44 im Übergangsfeld 43 sind für den Durchtritt der Schneiden 4'' des Hauptbohrers 32 bestimmt. Der ebene Zuschnitt 10'' wird über einen geometrisch dem Stufenbohrer entsprechenden Dorn gewickelt, so daß die den Schlitz 13' bildenden Ränder 14',15' auf Stoß gegeneinander anliegen. In diesem Zustand wird die aus Stahlblech bestehende Hülse 10' federelastisch gehärtet, so daß sie auf den Stufenbohrer so aufgeklemmt werden kann, daß sich die Schlitzränder 14',15' auf dem Vollmaterial einer der Rippen 8' abstützen und dort gegebenenfalls angeschweißt werden können.

Zusammenfassend ist folgendes festzustellen: Die Erfindung bezieht sich auf ein Bohrwerkzeug, bestehend aus einem Werkzeugkopf 3 und einem mindestens eine Spannut enthaltenden Werkzeugschaft 5. Auf den Werkzeugschaft wird eine diese eng umgebende geschlitzte Hülse 10 aufgesetzt, wobei die den Schlitz 13 begrenzenden Ränder 14,15 auf Vollmaterial des Werkzeugschafts 5 aufliegen. Durch die Spannuten 7 und die Hülse 10 werden Kanäle zum Abtransport der am Bearbeitungsgrund des Werkstücks abgetragenen Späne gebildet. Aufgrund des Schlitzes 13 kann die Hülse 10 durch leichtes Aufspreizen von der Seite des verdickten Werkzeugkopfes 3 aus auf den Werkzeugschaft 5 aufgeschoben werden.

## Patentansprüche

1. Bohrwerkzeug für Werkzeugmaschinen mit einem mindestens eine Schneide (4,4') aufweisenden Werkzeugkopf (3,3'), einem an den Werkzeugkopf (3,3') anschließenden, mit seinem dem Werkzeugkopf abgewandten Ende (6) in eine maschinenseitige Werkzeugaufnahme (21) einspannbaren Werkzeugschaft (5), mindestens einer in die Schaftoberfläche eingeformten, vom Werkzeugkopf (3,3') aus sich in Spanablaufrichtung zumindest über einen Teil der Schaftlänge erstreckenden geraden oder wendelförmigen Spannut (7) und einer den Werkzeugschaft (5) umfassenden und dabei die Spannut (7) zumindest über einen Teil ihrer Länge unter Bildung eines geschlossenen Spankanals übergreifenden Hülse (10,10'), **dadurch gekennzeichnet,** daß die Hülse (10,10') einen sich über ihre gesamte Länge erstreckenden Schlitz (13,13') aufweist.

2. Bohrwerkzeug nach Anspruch 1, **dadurch gekennzeichnet,** daß die Hülse (10) mit ihren den Schlitz (13) begrenzenden Rändern (14,15) in einem außerhalb der mindestens einen Spannut (7) befindlichen Oberflächenbereich (8) gegen den Werkzeugschaft (5) anliegt.

3. Bohrwerkzeug nach Anspruch 1 oder 2, **dadurch gekennzeichnet,** daß die Hülse (10) unter Durchmesservergrößerung und Erweiterung des Schlitzes (13) elastisch aufspreizbar ist.

4. Bohrwerkzeug nach einem der Ansprüche 1 bis 3, **dadurch gekennzeichnet,** daß die Hülse (10) aus einem federelastischen Material, vorzugsweise aus Federstahl besteht.

5. Bohrwerkzeug nach einem der Ansprüche 1 bis 3, **dadurch gekennzeichnet,** daß die Hülse (10) aus einem Sinterwerkstoff besteht.

6. Bohrwerkzeug nach einem der Ansprüche 1 bis 5, **dadurch gekennzeichnet,** daß der Werkzeugkopf (3,3') einen größeren Außendurchmesser als der Werkzeugschaft aufweist (D > d).

7. Bohrwerkzeug nach einem der Ansprüche 1 bis 6, **dadurch gekennzeichnet**, daß der Werkzeugkopf (3,3') eine in Spanablaufrichtung weisende Anschlagschulter (9) für die Hülse (10,10') aufweist.

8. Bohrwerkzeug nach einem der Ansprüche 1 bis 7, **dadurch gekennzeichnet,** daß die Schneide einen Flugkreisdurchmesser aufweist, der größer als der Außendurchmesser der Hülse (10,10') ist.

9. Bohrwerkzeug nach einem der Ansprüche 1 bis 8, **dadurch gekennzeichnet,** daß die Hülse (10) formschlüssig und/oder kraftschlüssig und/oder materialschlüssig mit dem Werkzeugschaft (5) verbunden ist.

10. Bohrwerkzeug nach einem der Ansprüche 1 bis 9, **dadurch gekennzeichnet,** daß die Hülse (10,10') zumindest im Bereich des Schlitzes (13,13') am Werkzeugschaft (5) angelötet, angeklebt oder angeschweißt ist.

11. Bohrwerkzeug nach einem der Ansprüche 1 bis 10, **dadurch gekennzeichnet,** daß der Schlitz (13, 13') gewendelt ist.

12. Bohrwerkzeug nach einem der Ansprüche 1 bis 11, **dadurch gekennzeichnet,** daß der Schlitz (13,13') durch Materialauftrag geschlossen ist.

13. Bohrwerkzeug nach einem der Ansprüche 1 bis 12, **dadurch gekennzeichnet,** daß die Hülse (10,10') an ihrer Außen- und/oder Innenfläche eine Oberflächenbeschichtung vorzugsweise aus Hartmetall trägt.

14. Bohrwerkzeug nach einem der Ansprüche 1 bis 13, **dadurch gekennzeichnet,** daß die Hülse (10,10') in Umfangsrichtung formschlüssig mit dem Hülsenschaft (5) verbunden ist.

15. Bohrwerkzeug nach Anspruch 14, **dadurch gekennzeichnet,** daß die Hülse (10) mindestens einen in eine entsprechende Ausnehmung (17) der Anschlagschulter (9) eingreifenden stirnseitigen Vorsprung (16') aufweist.

16. Bohrwerkzeug nach einem der Ansprüche 1 bis 15, **dadurch gekennzeichnet**, daß der Werkzeugschaft (5) mindestens zwei Schaftabschnitte (31,32) unterschiedlichen Durchmessers mit durchgehenden Spannuten (7') aufweist, daß in einem Stufenbereich zwischen den beiden Schaftabschnitten (31,32) mindestens eine weitere Schneide angeordnet ist und daß sich die Hülse (10') über mindestens einen der Schaftabschnitte (31,32) erstreckt.

17. Bohrwerkzeug nach einem der Ansprüche 1 bis 16, **dadurch gekennzeichnet**, daß die Hülse aus mindestens zwei in axialem Abstand voneinander angeordneten, zylindrischen Hülsenabschnitten unterschiedlichen Durchmessers zusammengesetzt ist.

18. Bohrwerkzeug nach Anspruch 17, **dadurch gekennzeichnet,** daß die Hülsenabschnitte durch die Spannuten (7') im Stufenbereich zwischen zwei Schaftabschnitten (31,32) übergreifende Stege miteinander verbunden sind.

19. Bohrwerkzeug nach einem der Ansprüche 1 bis 18, **dadurch gekennzeichnet,** daß der Werkzeugschaft (5) im Bereich seines einspannseitigen Endes (6) gemeinsam mit der Hülse (10) in eine maschinenseitige Absaugvorrichtung (22) einsetzbar ist.

20. Bohrwerkzeug nach einem der Ansprüche 1 bis 19, **dadurch gekennzeichnet,** daß der Werkzeugschaft (5) mindestens eine bis zum Werkzeugkopf (3) reichende und dort im Bereich der Schneide (4) mit dem Spankanal kommunizierenden, mit Druckluft und/oder einem Kühlschmiermittel beaufschlagbaren Zufuhrkanal aufweist.

21. Bohrwerkzeug nach einem der Ansprüche 1 bis 20, **dadurch gekennzeichnet**, daß die mindestens eine Spannut (7) einen teilkreisförmigen Querschnittsbereich aufweist.

22. Bohrwerkzeug nach einem der Ansprüche 1 bis 21, **dadurch gekennzeichnet,** daß der Werkzeugkopf (3) zum Einsetzen oder Auswechseln der Hülse (10) vom Werkzeugschaft (5) abnehmbar ist.

23. Bohrwerkzeug nach einem der Ansprüche 1 bis 22, **dadurch gekennzeichnet,** daß die mindestens eine Schneide (4,4',4'') eine spanbrechende und/oder spanformende Kanten- und/oder Spanflanken-Kontur zur Erzeugung von durch den mindestens einen Spankanal hindurchpassenden, kurzen und/oder lockigen Spänen aufweist.

24. Verfahren zur Herstellung eines Bohrwerkzeugs nach einem der Ansprüche 1 bis 4, 6 bis 9 und 11 bis 23, **dadurch gekennzeichnet**, daß ein einer Abwicklung der Hülse (10) entsprechender Zuschnitt aus ungehärtetem Metallblech auf einen dem Werkzeugschaft (5) geometrisch entsprechenden Dorn unter Bildung der geschlitzten Hülse (10) aufgewickelt und federelastisch gehärtet wird, und daß die auf diese Weise vorgefertigte Hülse (10) unter Aufweitung des Schlitzes (13) über den Werkzeugkopf (3) geschoben und auf den Werkzeugschaft (5) aufgeklemmt wird.

25. Verfahren zur Herstellung eines Bohrwerkzeugs nach einem der Ansprüche 1 bis 9 und 11 bis 23, **dadurch gekennzeichnet,** daß ein Metallblech über einen dem Werkzeugschaft geometrisch entsprechenden Stempel oder Dorn unter Bildung der Hülse spanlos umgeformt wird und daß die auf diese Weise vorgefertigte und mit einem Schlitz versehene Hülse (10) auf den Werkzeugschaft (5) montiert wird.

26. Verfahren nach Anspruch 25, **dadurch gekennzeichnet,** daß das Metallblech tiefgezogen oder fließgepreßt wird.

27. Verfahren zur Herstellung eines Bohrwerkzeugs nach einem der Ansprüche 1 bis 3, 5 bis 9 and 11 bis 23, **dadurch gekennzeichnet,** daß eine pastöse, Hartmetall enthaltende Masse in eine der Hülse (10) entsprechende Spritzgußform eingespritzt wird und daß die auf diese Weise vorgefertigte und mit einem Schlitz versehene Hülse anschließend gesintert und auf den Werkzeugschaft montiert wird.

28. Verfahren nach einem der Ansprüche 25 bis 27, **dadurch gekennzeichnet,** daß die Hülse (10) unter Bildung des Schlitzes (13) aufgeschnitten und vorzugsweise federelastisch gehärtet wird, und daß die auf diese Weise vorgefertigte Hülse (10) unter Aufweitung des Schlitzes über den Werkzeugkopf (3) geschoben und auf den Werkzeugschaft (5) aufgeklemmt wird.

29. Verfahren nach einem der Ansprüche 24 bis 28, **dadurch gekennzeichnet,** daß die Hülse (10) mit einem pastösen Hartmetallwerkstoff oberflächenbeschichtet und unter Fixierung der Schicht erhitzt wird.

30. Verfahren nach einem der Ansprüche 24 bis 29, **dadurch gekennzeichnet,** daß die Hülse (10) auf dem Werkzeugschaft angeklebt, angelötet oder angeschweißt wird.

## Claims

1. A drilling tool for machine tools, comprising a tool head (3, 3') having at least one cutting edge (4, 4'), a tool shank (5) joining the tool head (3, 3') and being adapted to be clamped in a tool holder (21) of the machine tool with an end (6) opposed to the tool head, at least one straight or helical chip groove (7) formed into the surface of the shank and extending from the tool head (3, 3') in the direction of chip flow along at least part of the length of the shank, and a sleeve (10, 10') encompassing the tool shank (5) and thereby covering the chip groove (7) at least over a part of its length under formation of a closed chip channel, **characterized in that** the sleeve (10, 10') has a slot (13, 13') extending over the entirety of its length.

2. The drilling tool of claim 1, **characterized in that** the sleeve (10) lies against the tool shank (5) with its edges (14, 15) which delimit the slot (13) in a surface region (8) away from the at least one chip groove (7).

3. The drilling tool of claim 1 or 2, **characterized in that** the sleeve (10) is adapted to be elastically spread apart, increasing its diameter and broadening the slot (13).

4. The drilling tool of one of claims 1 to 3, **characterized in that** the sleeve (10) consists of a resilient material, preferably of spring steel.

5. The drilling tool of one of claims 1 to 3, **characterized in that** the sleeve (10) consists of a sintered material.

6. The drilling tool of one of claims 1 to 5, **characterized in that** the tool head (3, 3') has a larger outer diameter than the tool shank (D > d).

7. The drilling tool of one of claims 1 to 6, **characterized in that** the tool head (3, 3') has a stop shoulder (9) for the sleeve (10, 10'), which is oriented in the direction of chip flow.

8. The drilling tool of one of claims 1 to 7, **characterized in that** the cutting edge has a rotary diameter which is larger than the outer diameter of the sleeve (10, 10').

9. The drilling tool of one of claims 1 to 8, **characterized in that** the sleeve (10) is affixed to the tool shank (5) in a form-fitting and/or friction-fitting and/or integral manner.

10. The drilling tool of one of claims 1 to 9, **characterized in that** the sleeve (10, 10') is soldered, glued, or welded to the tool shank (5) at least in the region of the slot (13, 13').

11. The drilling tool of one of claims 1 to 10, **characterized in that** the slot (13, 13') is helically shaped.

12. The drilling tool of one of claims 1 to 11, **characterized in that** the slot (13, 13') is closed by application of material.

13. The drilling tool of one of claims 1 to 12, **characterized in that** the sleeve (10, 10') has on its inner and/or outer surface a coating of preferably hard metal.

14. The drilling tool of one of claims 1 to 13, **characterized in that** the sleeve (10, 10') is connected to the tool shank (5) in a circumferential direction in a form-fitting manner.

15. The drilling tool of claim 14, **characterized in that** the sleeve (10) comprises at least one projection (16') at an end face, which engages a corresponding recess (17) of the stop shoulder (9).

16. The drilling tool of one of claims 1 to 15, **characterized in that** the tool shank (5) comprises at least two shank sections (31, 32) having different diameters and continuous chip grooves (7'), that at least one further cutting edge is disposed in a stepped region between the two shank sections (31, 32), and that the sleeve (10') extends over at least one of the shank sections (31, 32).

17. The drilling tool of one of claims 1 to 16, **characterized in that** the sleeve is comprised of at least two cylindrical sleeve sections having different diameters, which are disposed at an axial distance from one another.

18. The drilling tool of claim 17, **characterized in that** the sleeve sections are connected to each other by means of webs which extend over the chip grooves (7') in the stepped region between two shank sections (31, 32).

19. The drilling tool of one of claims 1 to 18, **characterized in that** the tool shank (5), together with the sleeve (10), is adapted to be mounted in the region of its clamping-side end (6) in a suction device (22) on the machine side.

20. The drilling tool of one of claims 1 to 19, **characterized in that** the tool shank (5) comprises at least one supply channel for pressurized air and/or a coolant and lubricant, which channel extends up to the tool head (3) and communicates thereat in the region of the cutting edge (4) with the chip channel.

21. The drilling tool of one of claims 1 to 20, **characterized in that** the at least one chip groove (7) has a partial-circular cross section region.

22. The drilling tool of one of claims 1 to 21, characterized in that the tool head (3) is adapted to be removed from the tool shank (5) for mounting or exchanging the sleeve (10).

23. The drilling tool of one of claims 1 to 22, **characterized in that** the at least one cutting edge (4, 4', 4") comprises a chip breaking and/or chip forming edge and/or chip flank contour for creating short and/or curled chips which fit through the at least one chip channel.

24. A method for manufacturing a drilling tool of one of claims 1 to 4, 6 to 9, and 11 to 23, **characterized in that** a blank of unhardened sheet metal corresponding to a development of the sleeve (10) is wound onto a mandrel geometrically corresponding to the tool shank (5) under formation of the slotted sleeve (10) and is resiliently hardened, and that the sleeve (10) prepared in this manner is pushed over the tool head (3) under widening of the slot (13) and clamped onto the tool shank (5).

25. A method for manufacturing a drilling tool of one of claims 1 to 9 and 11 to 23, **characterized in that** a sheet metal is formed in a non-cutting manner over a die or mandrel geometrically corresponding to the tool shank under formation of the sleeve, and that the sleeve (10) thus formed is mounted on the tool shank (5).

26. The method of claim 25, **characterized in that** the sheet metal is deep-drawn or extruded.

27. A method for manufacturing a drilling tool of one of claims 1 to 3, 5 to 9 and 11 to 23, **characterized in that** a pasty, hard metal-containing substance is injected into an injection mould corresponding to the sleeve (10), and that the sleeve thus formed is then sintered and mounted on the tool shank.

28. The method of one of claims 25 to 27, **characterized in that** the sleeve (10) is cut open under formation of the slot (13) and is preferably resiliently hardened, and that the sleeve (10) thus formed is pushed over the tool head (3) under widening of the slot and clamped onto the tool shank (5).

29. The method of one of claims 24 to 28, **characterized in that** the sleeve (10) is surface coated with a pasty hard metal material and heated to cure the coating.

30. The method of one of claims 24 to 29, **characterized in that** the sleeve (10) is glued, soldered or welded to the tool shank.

## Revendications

1. Outil de perçage pour des machines-outils, avec une tête d'outil (3, 3') présentant au moins un tranchant (4, 4'), avec une tige d'outil (5) se raccordant à la tête d'outil (3, 3') et pouvant être serrée, par son extrémité (6) opposée à la tête d'outil, dans un porte-outil (21) côté machine, avec au moins une rainure à copeaux (7) rectiligne ou en hélice, formée dans la surface de la tige et s'étendant à partir de la tête d'outil (3, 3'), dans la direction d'évacuation des copeaux, au moins sur une partie de la longueur de la tige, et avec une douille (10, 10') entourant la tige d'outil (5) et recouvrant alors la rainure à copeaux (7) au moins sur une partie de sa longueur, en formant un canal à copeaux fermé, **caractérisé** en ce que la douille (10, 10') présente une fente (13, 13') s'étendant sur toute sa longueur.

2. Outil de perçage selon la revendication 1, **caractérisé** en ce que la douille (10), par ses bords (14, 15) délimitant la fente (13), s'applique contre la tige d'outil (5) dans une région de surface (8) qui se trouve en dehors de la ou des rainures à copeaux (7).

3. Outil de perçage selon la revendication 1 ou 2, **caractérisé** en ce que la douille (10) peut être élastiquement écartée, avec augmentation du diamètre et élargissement de la fente (13).

4. Outil de perçage selon une des revendications 1 à 3, **caractérisé** en ce que la douille (10) est réalisée en un matériau à élasticité de ressort, de préférence en acier à ressorts.

5. Outil de perçage selon une des revendications 1 à 3, **caractérisé** en ce que la douille (10) est réalisée en un matériau fritté.

6. Outil de perçage selon une des revendications 1 à 5, **caractérisé** en ce que la tête d'outil (3, 3') présente un plus grand diamètre extérieur que la tige d'outil (D > d).

7. Outil de perçage selon une des revendications 1 à 6, **caractérisé** en ce que la tête d'outil (3, 3') présente un épaulement de butée (9) pour la douille (10, 10'), dirigé dans la direction d'évacuation des copeaux.

8. Outil de perçage selon une des revendications 1 à 7, **caractérisé** en ce que le tranchant présente un diamètre de cercle de coupe qui est supérieur au diamètre extérieur de la douille (10, 10').

9. Outil de perçage selon une des revendications 1 à 8, **caractérisé** en ce que la douille (10) est assemblée à la tige d'outil (5) par engagement positif et/ou par adhérence et/ou par liaison de matière.

10. Outil de perçage selon une des revendications 1 à 9, **caractérisé** en ce que la douille (10, 10') est, au moins dans la région de la fente (13, 13'), brasée, collée ou soudée sur la tige d'outil (5).

11. Outil de perçage selon une des revendications 1 à 10, **caractérisé** en ce que la fente (13, 13') est rendue hélicoïdale.

12. Outil de perçage selon une des revendications 1 à 11, **caractérisé** en ce que la fente (13, 13') est fermée par application de matière.

13. Outil de perçage selon une des revendications 1 à 12, **caractérisé** en ce que la douille (10, 10') porte un revêtement de surface sur sa face extérieure et/ou intérieure, de préférence en métal dur.

14. Outil de perçage selon une des revendications 1 à 13, **caractérisé** en ce que la douille (10, 10') est assemblée à la tige d'outil (5) par engagement positif en direction circonférentielle.

15. Outil de perçage selon la revendication 14, **caractérisé** en ce que la douille (10) présente au moins une saillie frontale (16'), qui s'engage dans un évidement correspondant (17) de l'épaulement de butée (9).

16. Outil de perçage selon une des revendications 1 à 15, **caractérisé** en ce que la tige d'outil (5) présente au moins deux parties de tige (31, 32) de diamètres différents avec des rainures à copeaux (7) ininterrompues, en ce qu'au moins un tranchant supplémentaire est disposé dans une région de gradin entre les deux parties de tige (31, 32), et en ce que la douille (10') s'étend sur au moins une des parties de tige (31, 32).

17. Outil de perçage selon une des revendications 1 à 16, **caractérisé** en ce que la douille est composée d'au moins deux parties de douille cylindriques de diamètres différents, disposées à distance axiale entre elles.

18. Outil de perçage selon la revendication 17, **caractérisé** en ce que les parties de douille sont mutuellement reliées par des branches qui recouvrent les rainures à copeaux (7) dans la région de gradin entre les deux parties de tige (31, 32).

19. Outil de perçage selon une des revendications 1 à 18, **caractérisé** en ce que la tige d'outil (5) peut, dans la région de son extrémité (6) côté serrage, être insérée conjointement avec la douille (10) dans un dispositif d'aspiration (22) côté machine.

20. Outil de perçage selon une des revendications 1 à 19, **caractérisé** en ce que la tige d'outil (5) présente au moins un canal d'alimentation, pouvant être alimenté en air comprimé et/ou en un réfrigérant lubrifiant, qui s'étend jusqu'à la tête d'outil (3) et y communique, dans la région du tranchant (4), avec le canal à copeaux.

21. Outil de perçage selon une des revendications 1 à 20, **caractérisé** en ce que la ou les rainures à copeaux (7) présentent une région de section en forme de cercle partiel.

22. Outil de perçage selon une des revendications 1 à 21, **caractérisé** en ce que la tête d'outil (3) peut être retirée de la tige d'outil (5) afin d'installer ou de remplacer la douille (10, 10').

23. Outil de perçage selon une des revendications 1 à 22, **caractérisé** en ce que le ou les tranchants (4, 4', 4") présentent un contour d'arête et/ou de flanc à copeaux brisant et/ou façonnant les copeaux, afin de produire des copeaux courts et/ou bouclés, passant à travers le ou les canaux à copeaux.

24. Procédé de fabrication d'un outil de perçage selon une des revendications 1 à 4, 6 à 9 et 11 à 23, **caractérisé** en ce qu'une pièce découpée en tôle métallique non trempée, correspondant à une projection développée de la douille (10), est enroulée sur un mandrin correspondant géométriquement à la tige d'outil (5), formant ainsi la douille fendue (10), et est trempée pour lui conférer une élasticité de ressort, et en ce que la douille (10) ainsi préfabriquée est, en élargissant la fente (13), enfilée sur la tête d'outil (3) et serrée sur la tige d'outil (5).

25. Procédé de fabrication d'un outil de perçage selon une des revendications 1 à 9 et 11 à 23, **caractérisé** en ce qu'une tôle métallique est mise en forme sans enlèvement de matière sur un mandrin ou poinçon correspondant géométriquement à la tige d'outil, formant ainsi la douille, et en ce que la douille (10) ainsi préfabriquée et pourvue d'une fente est montée sur la tige d'outil (5).

26. Procédé selon la revendication 25, **caractérisé** en ce que la tôle métallique est mise en forme par emboutissage ou par fluage.

27. Procédé de fabrication d'un outil de perçage selon une des revendications 1 à 3, 5 à 9 et 11 à 23, **caractérisé** en ce qu'une masse pâteuse, contenant du métal dur, est injectée dans un moule d'injection correspondant à la douille (10), et en ce que la douille ainsi préfabriquée et pourvue d'une fente est ensuite frittée et montée sur la tige d'outil.

28. Procédé selon une des revendications 25 à 27, **caractérisé** en ce que la douille (10) est ouverte par découpage, en formant la fente (13), et de préférence trempée pour lui conférer une élasticité de ressort, et en ce que la douille (10) ainsi préfabriquée est, en élargissant la fente (13), enfilée sur la tête d'outil (3) et serrée sur la tige d'outil (5).

29. Procédé selon une des revendications 24 à 28, **caractérisé** en ce que la douille (10) est revêtue en surface d'un matériau pâteux contenant du métal dur et chauffée, fixant ainsi le revêtement.

30. Procédé selon une des revendications 24 à 29, **caractérisé** en ce que la douille (10) est collée, brasée ou soudée sur la tige d'outil.
